# EUROPEAN PATENT SPECIFICATION

(11) **EP 1 963 070 B1**
(45) Date of publication and mention of the grant of the patent: **18.02.2015**
(21) Application number: 06849496.2
(22) Date of filing: 21.12.2006
(51) Int. Cl.: B29C 37/00, C08J 7/04, B29D 11/00, C09D 133/08

(54) **IN-MOLD COATING COMPOSITIONS FOR OPTICAL LENSES**
ZUSAMMENSETZUNGEN ZUR BESCHICHTUNG OPTISCHER LINSEN IN IHRER FORM
COMPOSITIONS DE REVETEMENT DE MOULE POUR LENTILLES OPTIQUES

(30) Priority: 21.12.2005 US 314837
(43) Date of publication of application: 03.09.2008
(73) Proprietor: ESSILOR INTERNATIONAL (COMPAGNIE GENERALE D'OPTIQUE), 94220 Charenton-le-Pont (FR)
(72) Inventor: DANG, Hoa Thien, St Petersburg, FL 33709 (US); TATMAN, Sheila, St Petersburg, FL 33709 (US)
(74) Representative: Santarelli
(86) International application number: PCT/IB2006/004154
(87) International publication number: WO 2007/141594

(56) References cited:
- US-A- 4 544 572
- US-A- 4 800 123
- US-A- 5 906 788
- US-A1- 2004 125 335

## Description

### BACKGROUND OF THE INVENTION

### 1. Field of the Invention

The present invention relates generally to coating technology, and in particular, to a composition adapted for use in an in-situ coating process for coating an optical surface for ophthalmic applications.

### 2. The Prior Art

In situ coating is a technology that integrates a lens coating process with a lens injection molding process. More specifically in the lens field, this technology involves directly injecting coating liquid into the mold to cover the exterior surface of the substrate lens. The challenge in ophthalmic applications is to optimize the coating chemistry and the molding process to retain the coating properties in terms of optical properties, mechanical properties and functional properties and to obtain the uniform coating thickness distribution with desirable thickness.

The prior art is well furnished in the topic of in mold coating processes but is not related and compatible with means characteristics required in the optical field and more specifically in the ophthalmic lens field. The patent application WO 03/031138 described a coating specifically formulated for use in an in-mold coating process, but all of these coatings comprised styrene polymer which is not compatible with optical requirements. Namely, styrene etches the polycarbonate lens and turns it hazy. Also, it is a high risk and hazardous (cancer mutating) agent.

US 5906788 discloses laminated, molded plastic articles having an excellent abrasive resistant coating. Said articles are prepared by a two-step process including applying to a mold surface a 100% reactive coating composition, at least partially curing the coating composition, applying to the exposed surface of the cured coating composition a thermoplastic material, and curing the thermoplastic material to form the laminated molded article.

The coating composition according to US 5906788 includes a polyfunctional acrylic monomer, a mono functional polyfunctional acrylic monomer such as hydroxymethyl acrylate, an acrylic-soluble thermoplastic, and a free radical initiator. The coating composition is partially cured by either UV or IR radiation.

US 4544572 describes a ophthalmic lense and a method for providing a thin coating thereon. The coating composition contains reactive ethylenically unsaturated groups. It is applied to a mold face and partially reacted. The coated mold is then used to cast the ophthalmic device. Among the compounds containing reactive ethylenically unsaturated groups, acrylates and methacrylates are cited.

US 4800123 discloses a scratch resistant coating for peroxide curable urethane elastomers. The coating is applied to at least one mold surface and the mold is closed for receiving the urethane elastomers. The coating comprises at least one polyfunctional monomer having three or more acryloxy groups per molecule, and at least one N-vinyl imido group containing monomers.

A typical ophthalmic polycarbonate lens is produced by injection molding. The lens has to be degated from the injection tree and prepared for the deposition of an abrasion resistant coating. Usually, abrasion resistance is required due of the soft nature of an injected thermal plastic polycarbonate lens. A completed abrasion resistant coated lens can take up to at least one day to prepare. In a typical production, the process can be weeks.

Also, the typical process of the prior art does not provide any other add-on-value for specialty lenses such as anti-reflective, reflective, photochromic, selective light blocking, decorative, multifocal, etc. properties, in addition to abrasion resistance.

It is an object of the present invention to propose a new coating chemistry specifically adapted to use in the in-situ coating technology of optical lens, and more particularly of ophthalmic lens based on a thermoplastic substrate like polycarbonate.

The invention is related to an in-mold solvent-free coating composition adapted for use in an in-situ coating process for coating an optical surface for ophthalmic application according to claims 1-14, said method of coating according to claim 16, and coated ophthalmic lenses according to claims 15 and 17.

### SUMMARY OF THE INVENTION

The present invention provides a direct and innovative way to coat an ophthalmic thermoplastic lens, and more particularly a polycarbonate lens, by combining the coating with the injection molding cycle. The coating is optically clear and the coating thickness can range from about 1 micron to about 100 microns. Advantageously, a coating according to the present invention is compatible with a lens material so as to adhere without causing any undesirable effects.

Also, the present invention will allow a variety of add-on-value in-mold coatings so as to provide lenses having additional properties, such as photochromic, anti-reflective, reflective, selected light blocking, decorative, multifocal, etc. properties, preferably in addition to abrasion resistance.

Accordingly, it is an object of the present invention to produce a coating which provides and/or includes at least the following characteristics:
- the coating is solvent free; in fact no volatile organic compounds (VOCs) should be generated during the in-mold coating process, which could perturb the polymerization parameters and thus the optical property of the lens;
- the coating is cured at a thermoplastic substrate high molding temperature while maintaining its optical clarity without etching the thermoplastic substrate;
- the coating can flow across the front surface of the lens before it gels and fast cures thereafter; the kinetic parameters are important to improve flow characteristics;
- the coating, advantageously, will impart desirable functional properties onto an ophthalmic lens such as, tintability, scratch resistance, etc.

Advantageously, the present invention successfully integrates an in-mold coating process with thermoplastic lens injection molding which itself involves high molding temperature and high melt temperature. Indeed, a coating according to the present invention is thermally curable and is optically clear and does not show visible interference fringes after coating onto a lens. Also, incorporating in-mold coating for thermoplastic lenses is energy saving, as a great amount of additional energy is not necessary to finish curing the lenses once they are removed from the mold.

In summary, the present invention provides an optically transparent coating that is compatible with the lens material in order to adhere to it without causing any undesirable effects while imparting the desired features (tint, scratch resistance, etc.) onto the lens material. A coating according to the present invention advantageously remains in liquid form to flow along a heated mold insert to a uniform thickness and then polymerizes quickly.

The coating composition according to the present invention comprises an in-mold coating composition comprising isobornyl acrylate, a surfactant and a multifunctional (meth)acrylate compound which is cured onto a heated surface with controlled coating distribution in an ophthalmic injection mold.

In yet another embodiment, a composition for use in in-mold thermally cured coating of ophthalmic lenses is provided comprising isobornyl acrylate, a surfactant and a multifunctional acrylate, at least one initiator and a metal salt.

In yet another embodiment, a coating composition according to the present invention comprises a tetra- or hexa-functional urethane acrylate for hardness and rigidity blended with di-functional acrylates for toughness and flexibility. Monofunctional (meth)acrylates including isobornyl acrylate are included to serve as reactive diluents and kinetic modifiers to improve flow characteristics. A catalyst and/or initiator is incorporated to contribute free radicals, and a metal complex (accelerator) is added. A surfactant is added to improve the flow of the coating across the mold insert.

These and other aspects, features and advantages of the present invention will be described or become apparent from the following detailed description of preferred embodiments.

### DETAILED DESCRIPTION OF PREFERRED EMBODIMENTS

A coating composition according to the present invention is solvent-less, and includes isobornyl acrylate, a surfactant, and a multifunctional (meth)acrylate compound. The (meth)acrylate compound is preferably thermally cured, which means the coating may be cured via, e.g., azo, peroxides, and/or blocked tertiary amine. Chemically speaking, the coating composition preferably includes multi-functional (meth)acrylates comprising up to hexa functional groups and with various molecular weights. Preferably, the present invention comprises a multi-functional urethane acrylic coating that is modified to meet various competing requirements. For example, such coating needs to stay in liquid form to flow along a hot mold insert to an even thickness and then polymerize rather quickly, since the lens molding process is being extended by the coating set time.

More particularly, a coating composition according to the present invention comprises (meth)acrylates including isobornyl acrylate, optionally monofunctional acrylates and/or monofunctional methacrylates such as hydroxylpropyl methacrylate, as well as tetrafunctional acrylates and/or tetrafunctional methacrylates and hexafunctional acrylates and/or hexafunctional methacrylates. A (meth)acrylate compound according to the invention may comprise at least a mixture of at least one hexafunctional (meth)acrylate, at least one difunctional (meth)acrylate, and at least two monofunctional (meth)acrylates including isobornyl acrylate. Exemplary acrylates that may be used in the present invention may include and are not limited to reactive multifunctional acrylates, preferably hexafunctional aliphatic urethane acrylates. For example, exemplary acrylates used in the present invention may include hexafunctional acrylates and at least one difunctional acrylate.

As used herein, the term "(meth)acrylate" refers to either the corresponding acrylate or methacrylate.

Acrylates may be obtained from UCB Chemicals or from Sartomer and Henkel (a German Co.), and may in one embodiment comprise, e.g., Ebecryl™ brand acrylates.

A brief general description of various Ebecryl acrylates in EB number formats which may be used according to the present invention is as follows:
1) 284: aliphatic urethane diacrylate diluted 12% with HDOHA. Excellent light fastness, exterior durability, toughness and good flexibility.
2) 1290: hexafunctional aliphatic urethane acrylate containing an acrylated polyol diluent. Provides fast cure with excellent hardness, solvent and abrasion resistance.
3) 5129: hexafunctional aliphatic urethane acrylate combining good scratch resistance with improved flexibility
4) 8301: hexafunctional aliphatic urethane acrylate containing an acrylated polyol diluent.

Use of hydroxylpropyl methacrylate presents a particular interest to slow down the reaction in the coating composition.

Multi-functional acrylates of three functional groups or higher advantageously will provide more cross linking and result in higher abrasion resistance. For example, hexa-functional acrylates will provide a high degree of cross linking due to having six (6) functional groups. The urethane backbone of these high functional acrylates provides flexibility and greater ability to resist heat. Difunctional acrylate species are used to increase the flexibility and toughness and to control the viscosity of the formulation for process-ability to a certain extent.

A monofunctional methacrylate, such as hydroxylpropyl methacrylate, serves as a monofunctional diluent and kinetic modifier. It is used to terminate the reaction or to slow down the propagation of polymerization so that it will have some stability and a window of reactivity for processing. Monofunctional methacrylates used in a composition according to the present invention serve as reactive diluents and kinetic modifiers to improve flow characteristics.

With regards to the term acrylates, it is to be noted that methacrylates and other unsaturated compounds, whether mono- or multifunctional may also be used in addition to or instead of acrylates. In some cases methacrylates may experience a slower chemical reaction during polymerization. Acrylate or methacrylate compounds may be selected from the family of aliphatic urethane acrylates which include, e.g., from two to about six functional groups.

A coating formulation having a particular ratio of acrylate derivative(s) (e.g., one example of preferred ratios is shown in Table 1 below) advantageously facilitates the provision of a coating composition which is compatible with optical criteria required for ophthalmic lenses.

In a preferred embodiment of the present invention, high molecular weight acrylates (for example, acrylates having a molecular weight of at least 1 Pa.s (1000 centipoises (cps)) or higher at 25°C) are preferably used for ophthalmic injection molding according to the present invention. This embodiment presents the advantage of improved control of the viscosity and flow of the coating composition on a heated surface. For example, a high injection pressure requires a high viscosity flow to allow for the higher temperature (i.e., higher than room temperature) during applied extrusion. It is to be noted that the viscosity may further be adjusted as necessary based on the particular injection molding parameters and requirements.

In one embodiment of the present invention, the coating composition preferably comprises an acrylic base cured with an initiator (e.g., t-butyl perbenzoate, t-amyl perbenzoate). In fact, the thermal cure process of the present invention utilizes free radical polymerization. The initiator (t-butyl perbenzoate, t-amyl perbenzoate) thermally decomposes to generate free radicals. These free radicals then attack monomers or oligomers (reactive multifunctional acrylates) to propagate the reaction to form long molecular chains and eventually a cross-linked network.

An in-mold coating composition according to the present invention preferably may further include at least one catalyst and/or initiator, and at least one metal salt. The initiator may be selected from, e.g., alkyl aralkyl peracide, azo derivatives and blocked tertiary amine, is preferably selected from ketone peroxides, diacyl peroxides, dialkylperoxides, diperoxyketals and peroxyesters, and in a very preferred embodiment comprises tert-butylperbenzoate, and tert-amylperbenzoate.

The examples disclosed herein preferably use peroxides derived from alkyl aralkyl peracide with a metal salt promoter. Peroxides are used to cure the coating via a free radical reaction. Metal salt promoters help to propagate free radicals quickly and minimize oxygen inhibition. The metal salt and peroxide concentration are preferably chosen to fit a curing cycle for the current process. The concentration ratio can be varied as necessary to fit a particular process requirement. Again, although use of peroxides for curing is a preferred method, and more specifically tert-butyl perbenzoate and tert-amyl perbenzoate are preferred candidate, alternative methods for curing may include use of azo and blocked tertiary amine.

The metal salt is preferentially selected from cobalt naphthenate, cobalt octoate, cobalt neodecanoate, copper naphthenate, zinc naphthenate, and potassium octoate, and preferably, the metal salt comprises cobalt naphthenate.

A preferred coating composition according to the invention comprises :
about 20% to 80% of a hexafunctional (meth)acrylate
compound;
about 10% to 60% of a difunctional (meth)acrylate compound;
about 5% to 25% of hydroxyl (propyl)methacrylate;
about 1% to 15% of isobornyl acrylate;
about 0.1% to 5% of t-butyl perbenzoate; and
about 0.01 % to 1% of cobalt naphthenate.

Another preferred coating composition according to the invention comprises :
about 50% of a hexafunctional (meth)acrylate compound;
about 26% of a difunctional (meth)acrylate compound;
about 15.3% of hydroxyl (propyl)methacrylate;
about 7.6%; of isobornyl acrylate;
about 1% of t-butyl perbenzoate; and
about 0.1% of cobalt naphthenate.

In one embodiment, an exemplary coating composition according to the present invention comprises the following:
a. at least one hexafunctional acrylate and/or hexafunctional methacrylate compound;
b. at least one difunctional acrylate and/or a difunctional methacrylate compound;
c. Hydroxyl propylmethacrylate;
d. Isobornyl acrylate;
e. T-butyl perbenzoate; and
f. Cobalt naphthenate.

An in-mold coating composition according the invention may optionally further include a surfactant which is preferably selected from a fluorinated surfactant or a silicone surfactant.

The coating composition may also optionally include acrylic or epoxy functionalized colloids, for example, OG-101 or OG-103 (available from CLARIANT), or functionalized colloidal silica with acrylic silanes, or other colloids such as, e.g., cerium colloid, niobium colloid, and antimony colloid.

An in-mold coating composition according to the present invention may further optionally include, e.g., a metal alkoxide which may be selected, for example, from zirconium isopropoxydes, methyl trimethoxysilane and tetraethoxysilane.

A coating composition according to the present invention may further optionally include at least one dichroic dye, a photochromic dye and/or one liquid crystal.

It is to be understood by one of ordinary skill in the art that the coating should preferably retain its qualities at the lens substrate molding temperature. e.g., for a polycarbonate substrate, such temperature is around 121°C (250°F).

Upon coating of an optical lens, a coating according to the present invention is optically clear and may have a thickness ranging from about 1 micron to about 100 microns. For example, typical abrasion resistance coating thickness ranges from about 1 micron to about 8 microns, and a photochromic system can be up to about 20 microns or more.

Advantageously, an in-mold coating composition according to the present invention provides very good anti-abrasion properties. To further increase abrasion resistance, it is also possible to include in the coating formulation according to the present invention acrylic or epoxy functionalized colloids, as discussed above. Metal alkoxides and its derivatives may also optionally be added as discussed above to increase refractive index, abrasion resistance and perhaps influence the rate of polymerization.

According to one embodiment, a coating composition according to the present invention comprises the following:

| | | |
|---|---|---|
| Hexafunctional aliphatic urethane acrylate | range: about 33% to 52% | preferred: 50% |
| Aliphatic urethane diacrylate diluted 12% with HDOHA | range: about 13% to 31% | preferred: 25% |
| Isobornyl acrylate | range: about 6% to 9% | preferred: 7.6% |
| Hydroxylpropyl methacrylate | range: about 12% to 18% | preferred: 16% |
| Tetrabutylperoxybenzoate | range: about 0.5% to 2% | preferred: 1% |
| Metal complex (e.g., cobalt naphthenate) | range: about 0.25 to 1% | preferred: 0.4% |

### Examples:

The following Table 1 lists components of an exemplary coating composition according to another embodiment of the present invention that was used in exemplary coating processes described in Examples 1, 2 and 3 below:

**TABLE 1**

| **COMPONENT** | **CONCENTRATION (%)** |
|---|---|
| Hexa functional aliphatic urethane acrylate | 50.0 |
| Di-functional acrylate | 27.0 |
| Hydroxy propylmethacrylate | 14.88 |
| Isobornyl Acrylate | 7.0 |
| t-butyl perbenzoate | 1.0 |
| Cobalt Naphthenate | 0.1 |
| Surfactant (e.g., EFKA 3034) | 0.02 |

### Various exemplary coating processes:

### EXAMPLE 1:Post-injection coating process:

First, a polycarbonate (PC) lens was injection molded within a mold, having two heated mold inserts. The molding process included a mold temperature set at 250° F, a melt temperature ranging from 279°C (535°F) to 296°C (565°F), packing pressure set at 3,1 MPa (450 psi) for 12 seconds and a cooling phase of 60 seconds.

At the end of the molding cycle, the mold opened for depositing of coating. Without removing the lens from the cavity a thermal curable coating was deposited in the middle of the injected lens. The mold was re-clamped and held for 5 minutes at 100°C.

Finally, the mold was opened and the optically clear coated lens was ejected from the mold.

This example typifies a method of coating an ophthalmic lens within a mold cavity by first providing an in-mold coating composition which is stable and liquid at room temperature. The coating introduced into the mold cavity, either before or after the lens is injected. The coating is cured as an integral component of the lens at the resin solidification temperature of the mold cavity.

### EXAMPLE 2:Stamp-coating process:

A metal plate which has a circular recess about 50µm deep was positioned horizontally on the parting surface of the mold. A limited amount of liquid coating was deposited onto the circular recess, referred to as a "cliché".

An air-inflated silicone membrane, driven by a pneumatic cylinder, moved downward to pick up the coating from the cliché and then moved back. After the cliché was removed from the mold parting surface, the silicone membrane then moved downward again to press against the heated mold insert and held there to let the coating pre-cure for 2 minutes. After that, the silicone membrane was removed with the coating remaining on the metal insert.

The mold was closed for the PC lens molding. The PC lens molding conditions were the same as the regular PC molding conditions as described above in example #1. At the end of the molding cycle, the mold opened and the coated lens, which is optically clear, was ejected out of the mold.

### EXAMPLE 3: Wafer-coating process

A liquid coating drop was deposited on the heated concave metal insert by an auto-dispenser. The temperature of the insert was 250°F.

A 1mm thick polycarbonate optical wafer which has a front surface base curve that matches with the concave insert base curve, was placed on top of the coating drop to spread the coating out to cover the entire insert surface.

The mold was immediately closed for PC lens molding. The PC lens molding conditions used were the same as described in example #1.

Curing of the coating was established via two minute delay prior to PC injection after the mold is closed. The two minute delay allows the coating to pre-cure to the degree that it won't be flushed away from the gate or damaged by the injected PC melt.

At the end of the lens injection molding cycle, the mold was opened and the coated PC lens, which is optically clear, was ejected out of the mold.

Please note, for this method, the PC wafer used to spread out the coating turns into an integral part of the final coated lens. It utilizes the advantage of the Engel machine in which the mold opens and closes vertically. This method may not work on horizontal machines as well as it does on the vertical Engel machine.

A surfactant such as a fluorinated surfactant (e.g., EFKA 3034) or a silicone surfactant (e.g., Silwet L-7602) may also be included in a coating composition according to the present invention. The surfactant in the coating composition may be added to improve wetability of the mold surface.

### Exemplary Coating Formulations:

Mold block inserts made of stainless steel and with a polished optical surface used to make PC lens in the injection molding machine were used in this study, along with premolded PC lens. The optical mold block set was heated at 140°C in a convection oven with a PC lens that is sandwiched between the two mold blocks. The optical curvature (base curve) of the mold block is matching to the lens optical curvature. The block was removed from the oven and a coating according to the present invention was immediately dispensed on the surface of the mold block. The heated PC lens was immediately pressed onto the dispersed coating and the mold block set was reassembled and placed back into the convection oven for 5 minutes at 140°C to cure the coating.

The coating was cured and transferred onto the PC lens surface with good adhesion and provided scratch and abrasion resistance to the PC substrate.

The following Table 2 lists components of exemplary coating formulations A, B and C by weight (grams) according to the present invention which provided a transparent coating:

**TABLE 2**

| Compounds | Example A (g) | Example B (g) | Example C (g) |
|---|---|---|---|
| Hexafunctional aliphatic urethane acrylate (e.g., Ebecryl #) | (8301) 13g | (5129) 13g | (588) 13g |
| Aliphatic urethane diacrylic diluted 12% with HDOHA (e.g., Ebecryl 284) | 7 | 7 | 7 |
| Isobornyl acrylate | 2 | 2 | 2 |
| 2-hydroxypropyl methacrylate | 4 | 4 | 4 |
| Cobalt naphthenate | 0.1 | 0.1 | 0.1 |
| t-Butyl perbenzoate | 0.26 | 0.26 | 0.26 |

It is to be noted that in Example B above, the composition may further include a photochromic dye (e.g.,photochromic dye 1077) in the amount of 0.05 grams. The incorporation of such photochromic or cosmetic dyes would be considered a functional optical additive to the coating. The coating also includes a protective hard-coat component, i.e. di-functional or multi-functional (meth)acrylates. The diluent component consists of a methacrylate and is combined with a catalyst and a metal salt.

It will be understood that certain features and subcombinations are of utility and may be employed without reference to other features and subcombinations. This is contemplated by and is within the scope of our claims. All changes and modifications are intended to be included within the scope of the invention as defined by the appended claims.

## Claims

1. An in-mold solvent-free coating composition adapted for use in an in-situ coating process for coating an optical surface for ophthalmic application comprising isobornyl acrylate, a surfactant and a multifunctional (meth)acrylate compound, wherein said coating composition has a viscosity of at least 1 Pa.s (1000 cps) at 25°C, and can remain in liquid form to flow along a heated mold insert to a uniform thickness and then thermally cure.

2. The coating composition according to claim 1, wherein the multifunctional (meth)acrylate compound is a hexafunctional aliphatic urethane acrylate compound.

3. The coating composition according to any one of claims 1 to 2, wherein the coating composition comprises a mixture of at least one multifunctional (meth)acrylate, at least one difunctional (meth)acrylate, and at least two monofunctional (meth)acrylate including isobornyl acrylate.

4. The coating composition according to any one of claims 1 to 2, wherein the coating composition comprises a mixture of at least one hexafunctional (meth)acrylate, at least one difunctional (meth)acrylate, and at least two monofunctional (meth)acrylates including isobornyl acrylate.

5. The coating composition according to any one of claims 3 or 4, wherein the two monofunctional (meth)acrylates are isobornyl acrylate and 2-hydroxy-methacrylate.

6. The coating composition according to any one of claims 3 or 4, wherein the two monofunctional (meth)acrylates are isobornyl acrylate and hydroxy-propyl-methacrylate.

7. The coating composition according to any one of claims 1 to 6, further including at least one initiator and one metal salt.

8. The coating composition according to claim 7, wherein the initiator is selected from alkyl aralkyl peroxide, azo derivatives and blocked tertiary amine.

9. The coating composition according to claim 7, wherein the initiator is selected from ketone peroxides, diacyl peroxides, dialkylperoxides, diperoxyketals and peroxyesters.

10. The coating composition according to claim 7, wherein the initiator is selected from tert-butyl-perbenzoate and t-amyl-perbenzoate.

11. The coating composition according to claim 7, wherein the metal salt is selected from cobalt naphthenate, cobalt octoate, cobalt neodecanoate, copper naphthenate, zinc naphthenate, and potassium octoate.

12. The coating composition according to claim 1, wherein the composition comprises:
about 20% to 80% of a hexafunctional (meth)acrylate compound;
about 10% to 60% of a difunctional (meth)acrylate compound;
about 5% to 25% of hydroxyl (propyl)methacrylate;
about 1% to 15% of isobornyl acrylate;
about 0.1% to 5% of t-butyl perbenzoate; and
about 0.01% to 1% of cobalt naphthenate.

13. The coating composition according to any one of claims 1 to 12, wherein the surfactant is selected from a fluorinated surfactant and a silicone surfactant.

14. The coating composition according to claim 1, wherein the composition comprises:
about 50% of a hexafunctional (meth)acrylate compound;
about 26% of a difunctional (meth)acrylate compound;
about 15.3% of hydroxyl (propyl)methacrylate;
about 7.6%; of isobornyl acrylate;
about 1% of t-butyl perbenzoate; and
about 0.1% of cobalt naphthenate.

15. A coated ophthalmic lens including the in-mold applied coating composition of any one of claims 1 to 14.

16. A method of coating an ophthalmic lens within a mold cavity comprising :
providing an in-mold coating composition according to any one of claims 1 to 14, which is stable and liquid at room temperature ;
introducing the coating into the mold cavity ; and
curing the coating as an integral component of the lens at the resin solidification temperature of the mold cavity.

17. An ophthalmic lens coated according to the method of claim 16.

## Patentansprüche

1. Lösungsmittelfreie Beschichtungszusammensetzung zur Verwendung in der Form zur Verwendung bei einem in-situ-Beschichtungsprozess zum Beschichten einer optischen Oberfläche zur ophthalmischen Anwendung, umfassend Isobornylacrylat, ein Tensid und eine multifunktionelle (Meth)Acrylatverbindung, wobei die Beschichtungszusammensetzung eine Viskosität von mindestens 1 Pa.s (1000 cP) bei 25°C aufweist und in flüssiger Form bleiben kann, um entlang eines erhitzten Formeinsatzes zu gleichmäßiger Dicke zu fließen, und dann thermisch härten kann.

2. Beschichtungszusammensetzung nach Anspruch 1, wobei es sich bei der multifunktionellen (Meth)-Acrylatverbindung um eine hexafunktionelle aliphatische Urethanacrylatverbindung handelt.

3. Beschichtungszusammensetzung nach einem der Ansprüche 1 bis 2, wobei die Beschichtungszusammensetzung eine Mischung aus mindestens einem multifunktionellen (Meth)Acrylat, mindestens einem difunktionellen (Meth)Acrylat und mindestens zwei monofunktionellen (Meth)Acrylaten einschließlich Isobornylacrylat umfasst.

4. Beschichtungszusammensetzung nach einem der Ansprüche 1 bis 2, wobei die Beschichtungszusammensetzung eine Mischung aus mindestens einem hexafunktionellen (Meth)Acrylat, mindestens einem difunktionellen (Meth)Acrylat und mindestens zwei monofunktionellen (Meth)Acrylaten einschließlich Isobornylacrylat umfasst.

5. Beschichtungszusammensetzung nach einem der Ansprüche 3 oder 4, wobei es sich bei den beiden monofunktionellen (Meth)Acrylaten um Isobornylacrylat und 2-Hydroxymethacrylat handelt.

6. Beschichtungszusammensetzung nach einem der Ansprüche 3 oder 4, wobei es sich bei den beiden monofunktionellen (Meth)Acrylaten um Isobornylacrylat und Hydroxypropylmethacrylat handelt.

7. Beschichtungszusammensetzung nach einem der Ansprüche 1 bis 6, die ferner mindestens einen Initiator und ein Metallsalz enthält.

8. Beschichtungszusammensetzung nach Anspruch 7, wobei der Initiator aus Alkylaralkylperoxid, Azoderivaten und blockiertem tertiärem Amin ausgewählt ist.

9. Beschichtungszusammensetzung nach Anspruch 7, wobei der Initiator aus Ketonperoxiden, Diacylperoxiden, Dialkylperoxiden, Diperoxyketalen und Peroxyestern ausgewählt ist.

10. Beschichtungszusammensetzung nach Anspruch 7, wobei der Initiator aus tert-Butylperbenzoat und t-Amylperbenzoat ausgewählt ist.

11. Beschichtungszusammensetzung nach Anspruch 7, wobei das Metallsalz aus Cobaltnaphthenat, Cobaltoctoat, Cobaltneodecanoat, Kupfernaphthenat, Zinknaphthenat und Kaliumoctoat ausgewählt ist.

12. Beschichtungszusammensetzung nach Anspruch 1, wobei die Zusammensetzung:
etwa 20% bis 80% einer hexafunktionellen (Meth)-Acrylatverbindung;
etwa 10% bis 60% einer difunktionellen (Meth)-Acrylatverbindung;
etwa 5% bis 25% Hydroxy(propyl)methacrylat;
etwa 1% bis 15% Isobornylacrylat;
etwa 0,1% bis 5% t-Butylperbenzoat und
etwa 0,01% bis 1% Cobaltnaphthenat
umfasst.

13. Beschichtungszusammensetzung nach einem der Ansprüche 1 bis 12, wobei das Tensid aus einem fluorierten Tensid und einem Silikontensid ausgewählt ist.

14. Beschichtungszusammensetzung nach Anspruch 1, wobei die Zusammensetzung:
etwa 50% einer hexafunktionellen (Meth)Acrylatverbindung;
etwa 26% einer difunktionellen (Meth)Acrylatverbindung;
etwa 15,3% Hydroxy(propyl)methacrylat;
etwa 7,6% Isobornylacrylat;
etwa 1% t-Butylperbenzoat und
etwa 0,1% Cobaltnaphthenat
umfasst.

15. Beschichtete ophthalmische Linse mit der in der Form aufgebrachten Beschichtungszusammensetzung nach einem der Ansprüche 1 bis 14.

16. Verfahren zum Beschichten einer ophthalmischen Linse in einer Formhöhlung, bei dem man:
eine Beschichtungszusammensetzung zur Verwendung in der Form nach einem der Ansprüche 1 bis 14, die bei Raumtemperatur stabil und flüssig ist, bereitstellt;
die Beschichtung in die Formhöhlung einträgt und
die Beschichtung als integrale Komponente der Linse bei der Harzverfestigungstemperatur der Formhöhlung härtet.

17. Ophthalmische Linse, beschichtet nach dem Verfahren nach Anspruch 16.

## Revendications

1. Composition de revêtement dans le moule sans solvant adaptée à une utilisation dans un procédé de revêtement in situ destiné à revêtir une surface optique pour application ophtalmique comprenant de l'acrylate d'isobornyle, un tensioactif et un composé (méth)acrylate multifonctionnel, ladite composition de revêtement ayant une viscosité d'au moins 1 Pa.s (1000 cP) à 25 °C, et pouvant rester sous forme liquide pour s'écouler le long d'un insert de moule chauffé en une épaisseur uniforme puis durcir thermiquement.

2. Composition de revêtement selon la revendication 1, dans laquelle le composé (méth)acrylate multifonctionnel est un composé acrylate d'uréthane aliphatique hexafonctionnel.

3. Composition de revêtement selon l'une quelconque des revendications 1 à 2, la composition de revêtement comprenant un mélange d'au moins un (méth)acrylate multifonctionnel, d'au moins un (méth)acrylate difonctionnel, et d'au moins deux (méth)acrylates monofonctionnels incluant l'acrylate d'isobornyle.

4. Composition de revêtement selon l'une quelconque des revendications 1 à 2, la composition de revêtement comprenant un mélange d'au moins un (méth)acrylate hexafonctionnel, d'au moins un (méth)acrylate difonctionnel, et d'au moins deux (méth)acrylates monofonctionnels incluant l'acrylate d'isobornyle.

5. Composition de revêtement selon l'une quelconque des revendications 3 et 4, dans laquelle les deux (méth)acrylates monofonctionnels sont l'acrylate d'isobornyle et le 2-hydroxy-méthacrylate.

6. Composition de revêtement selon l'une quelconque des revendications 3 et 4, dans laquelle les deux (méth)acrylates monofonctionnels sont l'acrylate d'isobornyle et le méthacrylate d'hydroxypropyle.

7. Composition de revêtement selon l'une quelconque des revendications 1 à 6, comportant en outre au moins un initiateur et un sel métallique.

8. Composition de revêtement selon la revendication 7, dans laquelle l'initiateur est choisi parmi un peroxyde d'alkylaralkyle, des dérivés azoïques et une amine tertiaire bloquée.

9. Composition de revêtement selon la revendication 7, dans laquelle l'initiateur est choisi parmi les peroxydes de cétones, les peroxydes de diacyle, les peroxydes de dialkyle, les diperoxycétals et les peroxyesters.

10. Composition de revêtement selon la revendication 7, dans laquelle l'initiateur est choisi parmi le perbenzoate de tert-butyle et le perbenzoate de t-amyle.

11. Composition de revêtement selon la revendication 7, dans laquelle le sel métallique est choisi parmi le naphténate de cobalt, l'octoate de cobalt, le néodécanoate de cobalt, le naphténate de cuivre, le naphténate de zinc, et l'octoate de potassium.

12. Composition de revêtement selon la revendication 1, la composition comprenant :
environ 20 % à 80 % d'un composé (méth)acrylate hexafonctionnel ;
environ 10 % à 60 % d'un composé (méth)acrylate difonctionnel ;
environ 5 % à 25 % de méthacrylate d'hydroxypropyle ;
environ 1 % à 15 % d'acrylate d'isobornyle ;
environ 0,1 % à 5 % de perbenzoate de t-butyle ; et
environ 0,01 % à 1 % de naphténate de cobalt.

13. Composition de revêtement selon l'une quelconque des revendications 1 à 12, dans laquelle le tensioactif est choisi parmi un tensioactif fluoré et un tensioactif siliconé.

14. Composition de revêtement selon la revendication 1, la composition comprenant :
environ 50 % d'un composé (méth)acrylate hexafonctionnel ;
environ 26 % d'un composé (méth)acrylate difonctionnel ;
environ 15,3 % de méthacrylate d'hydroxypropyle ;
environ 7,6 % d'acrylate d'isobornyle ;
environ 1 % de perbenzoate de t-butyle ; et
environ 0,1 % de naphténate de cobalt.

15. Lentille ophtalmique revêtue comportant la composition de revêtement appliquée en moule de l'une quelconque des revendications 1 à 14.

16. Procédé de revêtement d'une lentille ophtalmique à l'intérieur d'une cavité de moule comprenant :
la fourniture d'une composition de revêtement dans le moule selon l'une quelconque des revendications 1 à 14, qui est stable et liquide à température ambiante ;
l'introduction du revêtement dans la cavité de moule ; et
le durcissement du revêtement sous la forme d'un composant intégral de la lentille à la température de solidification de résine de la cavité de moule.

17. Lentille ophtalmique revêtue selon le procédé de la revendication 16.
